# EUROPEAN PATENT SPECIFICATION

(11) **EP 2 872 395 B1**
(45) Date of publication and mention of the grant of the patent: **05.10.2016**
(21) Application number: 13779418.6
(22) Date of filing: 11.07.2013
(51) Int. Cl.: B64C 1/14, E05B 53/00, E05C 17/60, E05C 17/50

(54) **AIRCRAFT COMPRISING A SLIDING DOOR WITH A LOCKING MECHANISM**
FLUGZEUG AUFWEISEND EINE ROLLTÜR MIT VERSCHLUSSMECHANISMUS
AÉRONEF COMPRENANT UNE PORTE GLISSANTE AVEC UN MÉCANISME DE VERROUILLAGE

(30) Priority: 11.07.2012 TR 201208055
(43) Date of publication of application: 20.05.2015
(73) Proprietor: Tusas-Türk Havacilik Ve Uzay Sanayii A.S., 06980 Ankara (TR)
(72) Inventor: DOKUYUCU, Özgür, Ankara (TR); BAYRAK, Bülent, Ankara (TR); ERYIGIT, Mehmet, Ankara (TR); OZERCIYES, Omer Varlik, Ankara (TR); TIMOCIN, Burak, Ankara (TR); KIZILTAN, Ender, Ankara (TR)
(74) Representative: Cayli, Hülya
(86) International application number: PCT/TR2013/000224
(87) International publication number: WO 2014/011130

(56) References cited:
- WO-A1-84/00786
- US-A- 4 720 065
- US-A- 4 944 473
- US-A- 5 305 969
- US-A- 5 337 977
- US-A- 5 636 814

## Description

### Technical Field

The present invention according to claim 1 relates to an aircraft comprising a sliding passenger door with a locking mechanism and a guide rail, whereby the locking mechanism enables the safe locking and releasing of aircraft doors when at an open position, during the flight or while the aircraft is parked.

### Prior Art

On the doors of the aircrafts used contemporarily many different mechanisms have been designed in order to lock said doors and many of these mechanisms cannot be used for long periods of time due to their complex structures. The parts that enable the locking action are usually the hinge mechanism itself or parts that are connected to said mechanism. In such locking mechanisms as there are no redundant locking mechanisms present, in the event of a malfunction an intervention must be immediately carried out the problem must be solved. Complex structures make it more difficult to carry out a procedure on the door during a malfunction and repair and maintenance times are also increased.

In the state of the art US patent document numbered US5305969**,** a locking device with a cam that ensures that the door is in an open position is described. The door is locked by means of a manual handle.

In the state of the art US patent document numbered US4720065**,** a door that can be opened both inwards and outwards by means of a rotational action around a fixed hinge axis and a locking device that enables for the door to be locked when the door is at an open or closed position is described. The locking action is carried out when the door is at an open position over the parts that are at the same time hinges.

This door comprises a hinge mechanism and a control mechanism that can be programmed. Aside from this, it comprises a locking/unlocking mechanism, pressurized lock cover, actuation mechanism, and distributable emergency evacuation system and actuation connection. The door can take a fully opened and fully closed position parallel to the aircraft. The door can be opened in all intermediate positions inwards into the fuselage, in such a manner that, it can cut both the inflow and outflow of air.

In the US patent document numbered US4944473A**,** in the known state of the art, a mechanism designed for an aircraft door which comprises control means that determines the errors in cases where the door is out of order, is described. In the situation where the door cannot be fully closed and/or cannot be locked, said control means enables for such a problem to be immediately identified.

WO 84/00786 B1 discloses an aircraft with a sliding passenger door comprising a locking mechanism including the features of the preamble of claim 1.

15 The locking mechanism subject to the invention according to claim 1 has advantages when compared with the patent documents mentioned above. This invention has a simpler mechanism in comparison to the complex mechanisms used in other documents. This is a locking mechanism that enables for the door to stay in a fully open position wherein said door can move by sliding up and down in a guide rail located on the aircraft and released when desired. The invention is superior in terms of the operating system of the door, the fact that the door can be locked when it is at an open position and the fact that the door can also be released, said invention is also superior in terms of the parts that enable the locking and the logic behind the locking process when compared with the above mentioned documents.

### Brief Description of the Invention

The aim of the invention is to provide an aircraft comprising a sliding passenger door with a locking mechanism and a guide rail, in which the locking mechanism enables the door to be locked in a fully open position and suspended and released when desired.

Another aim of the invention according to claim 1 is to provide a locking mechanism that can carry out a locking procedure automatically, with the respective motion of the door, when said door is being brought to an open position.

Another purpose of the invention according to claim 1 is to provide a locking mechanism which comprises a redundant locking mechanism.

The aim of the invention according to claim 1 is to provide a locking mechanism that enables for the doors of aircrafts to be opened without lifting the door upwards (without the necessity to exert excess power).

Yet another aim of the invention according to claim 1 is to provide a locking mechanism that comprises lighter elements.

### Detailed Description of the Invention

A locking mechanism carried out in order to reach the aim of the invention according to claim 1 has been illustrated in the attached figures, wherein according to said figures:

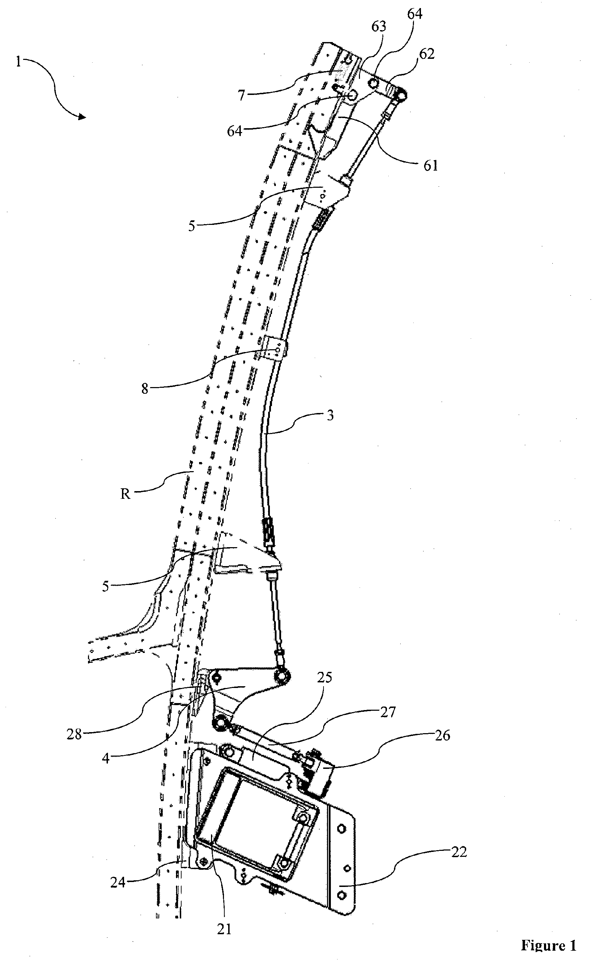

Figure 1- is a side view of the locking mechanism.

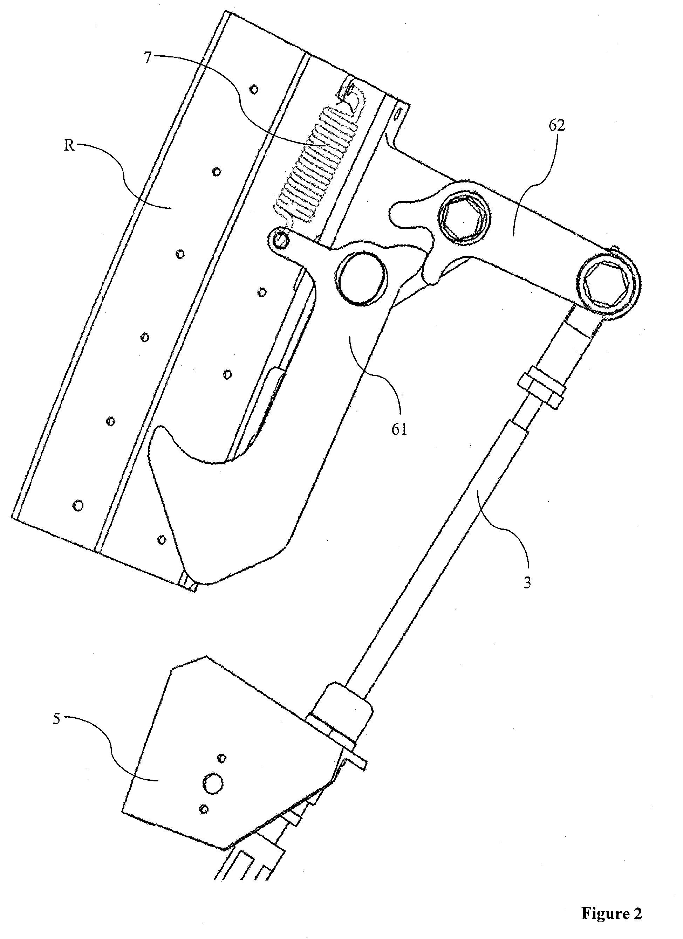

Figure 2- is the side view of the hook mechanism.

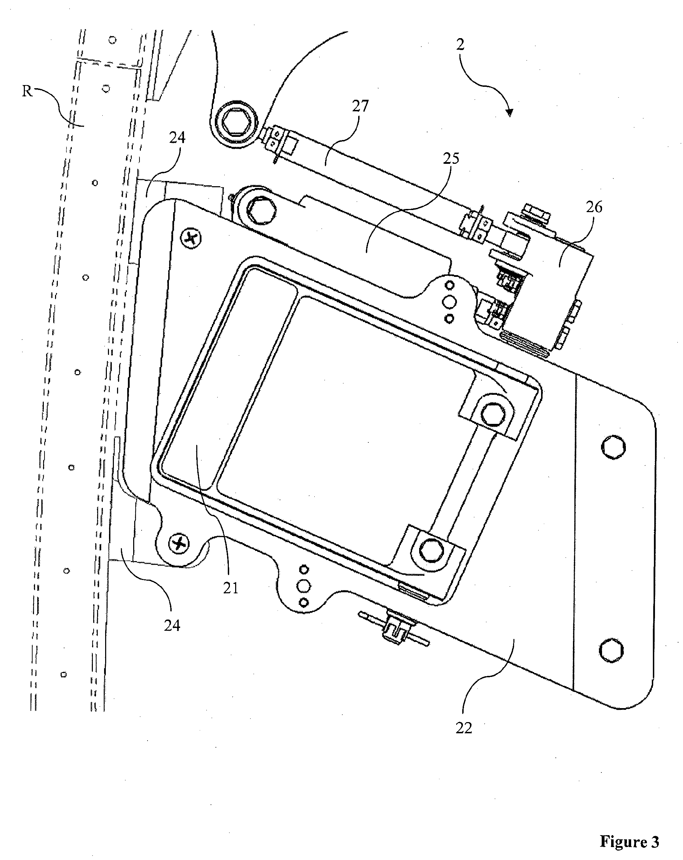

Figure 3- is the side view of the opening handle mechanism.

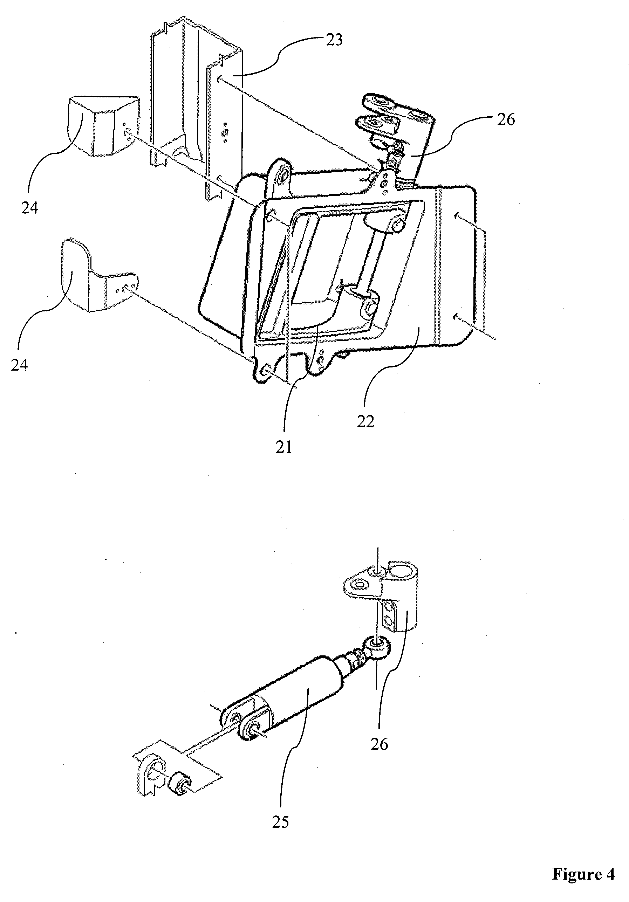

Figure 4- shows the exploded views of the opening handle mechanism.

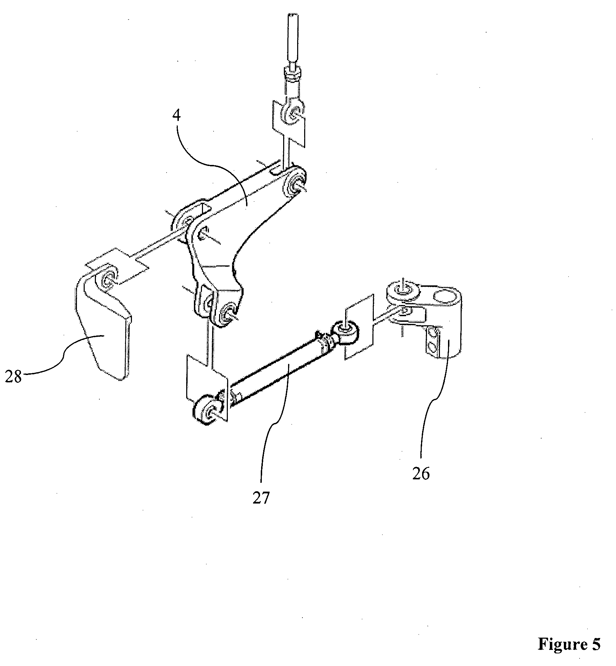

Figure 5- shows the exploded views of the motion transfer means, the door connection means, the centering spring and the lever.

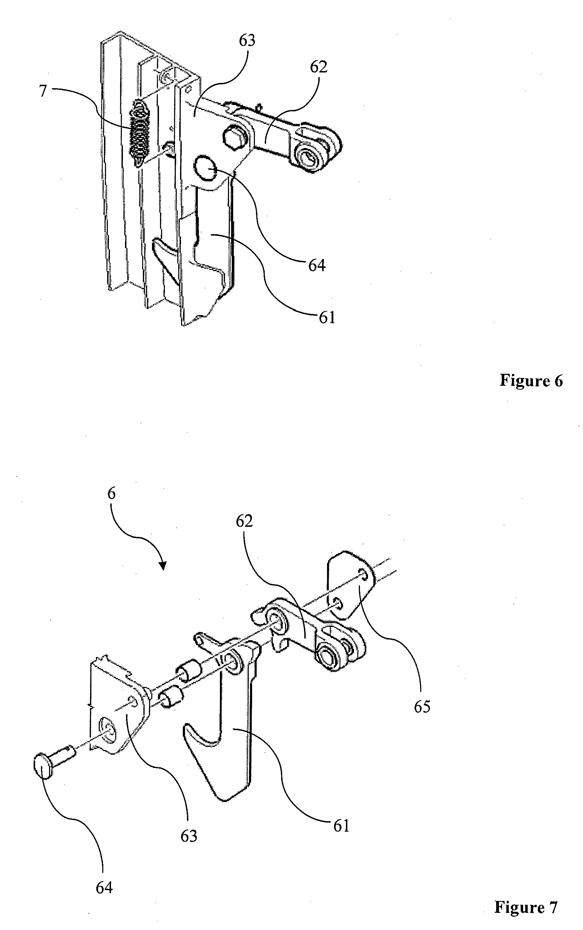

Figure 6- is the isometric view of the hook mechanism.
Figure 7- is the exploded view of the hook mechanism.

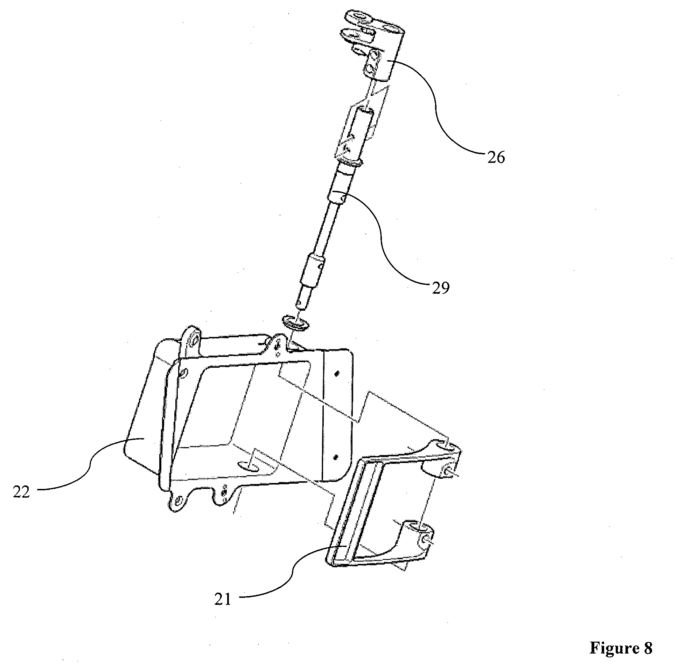

Figure 8- is the exploded view of the opening handle mechanism.

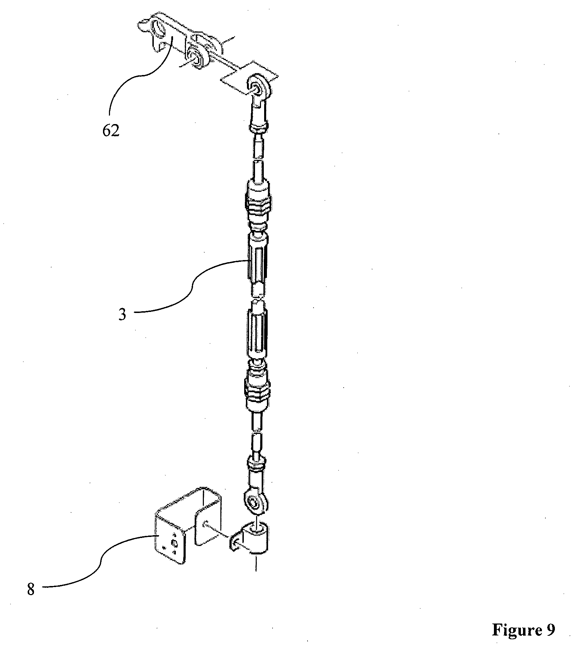

Figure 9- Is the exploded view of the push-pull cable.

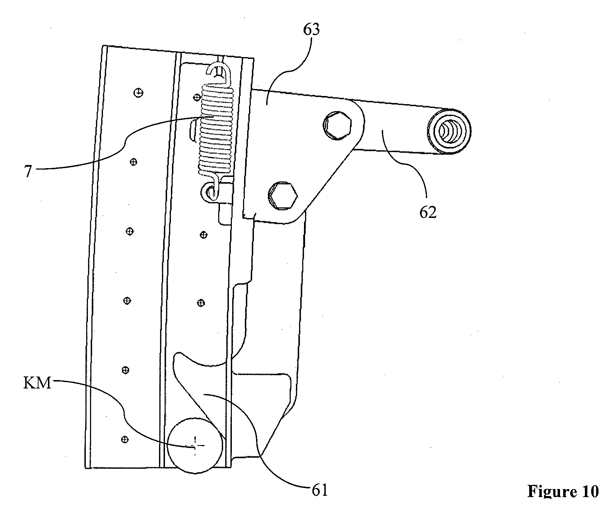

Figure 10 - is the view wherein the door roller is in contact with the cam form of the hook.

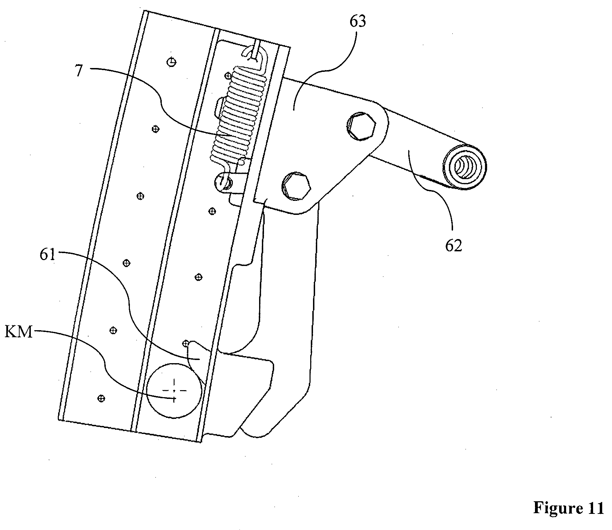

Figure 11- shows the view where the door roller pushes the hook out of the door guide rail.

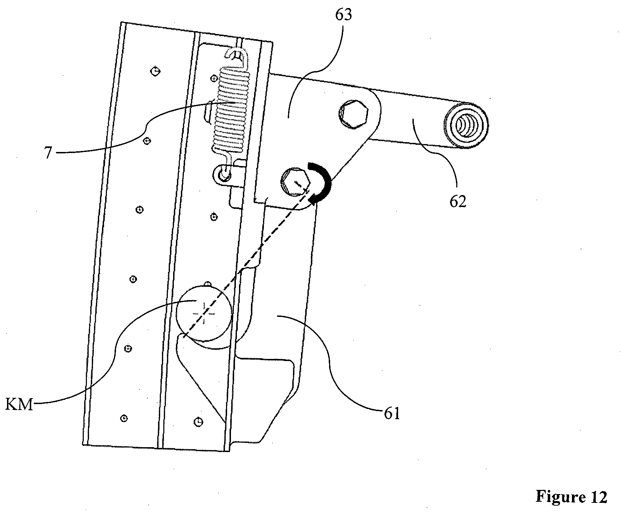

Figure 12- shows the view where the hook latches on to the door roller (locked position)

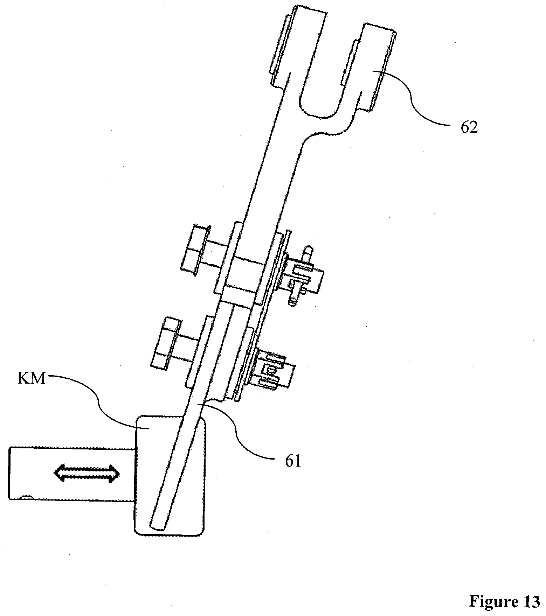

Figure 13- shows the angular positioning view of the hook and door roller with respect to each other.

The parts in the figures have each been numbered and the references of said numbers have been explained below.
- 1-: Locking mechanism
- 2-: Opening handle mechanism

- 21.: Opening handle
- 22.: Body of opening handle
- 23.: Connection bracket
- 24.: Connection bracket
- 25.: Centering spring
- 26.: Lever
- 27.: Lever arm
- 28.: Support bracket

- 3-: Push- pull cable
- 4-: Motion transfer means
- 5-: Cable connection member
- 6-: Hook mechanism

- 61.: Hook
- 62.: Hook driver
- 63.: Door guide rail part
- 64.: Coupling means
- 65.: Connection means

- 7-: Elastic means
- 8-: Support bracket

R. Guide rail of aircraft door
KM. Roller of aircraft door

The locking mechanism (1) that enables for the aircraft door to be locked when at an open position and released; during a flight, or when the aircraft is parked basically comprises;
- At least one opening door handle (2) that enables for the door to be released,
- At least a push-pull cable (3) that transfers the necessary motion of the opening handle (21) in order to ensure that the door is released,
- At least a motion transfer means (4) that submits the motion to the push-pull cable (3) by changing the direction of the movement of the door handle mechanism (2),
- At least a cable connection member (5) that is located on the aircraft used in order to fix the push-pull cable (3),
- At least a hook mechanism (6) that enables for the door to be locked when at a fully open position and enables for the door to be released when desired,
- At least an elastic element(7) that forces the hook mechanism (6) to stay inside the guide rail (R),
- At least a support bracket (8) belonging to the clamp mounted in order to prevent the sagging of the push-pull cable (3).

An opening handle mechanism (2) that releases the door so that it moves downwards when a force is applied on top comprises;
- At least an opening handle (21) used in order to open the door from the inside of an aircraft,
- At least an opening handle body (22) that is inserted inside the opening handle (21),
- Connection brackets (23,24) that connect the opening handle body (22) to the aircraft structure,
- At least a centering spring (25) that enables for the opening handle (21) to return to its initial position after force is applied to the opening handle (21) and then released,
- At least a lever (26) connected to the centring spring (25) to which the force whose direction has been changed is transferred to,
- At least a lever arm (27) that takes the force that has been applied to the opening handle (21) from the lever (26) and transfers it to the motion transfer means (4),
- At least a support bracket (28) located on the air craft structure in order to mount the motion transfer means (4).

The hook mechanism (6) comprises,
- At least a hook (61) that enables for the door to be fixed and locked at an open position and released when desired,
- At least a hook driver (62) that is latched onto the top part of the hook (61) and that transfers the motion received from the opening handle (21) to the hook (61),
- At least a door rail part (63) that connects the hook (61) and the hook driver (62) to the door,
- At least a coupling means (64) that form the rotating axis of the hook (61) and the hook driver (62) by preferably inserting to the guide rail part (63).

According to the locking mechanism (1) subject to the invention, when the aircraft door is slid upwards, the hook (61) catches the door roller (KM). The hook (61) catches the door roller (KM), by means of the cam form that is located at the lowermost part of the hook (61). The hook then returns to its initial position by the aid of the elastic element (7) and the door is locked at the uppermost position. During this operation, the opening handle (21) does not move due to the cam form located between the hook (61) and the hook driver (62).

The opening handle (21) is used in order to open and close the door. The door is released from its locked position when the user, pulls the handle towards himself/herself preferably at a 30 degree angle to the aircraft structure. The motion is transferred to the hook driver (62) via the push - pull cable (3). The hook driver (62) turns the hook (61) by means of the cam form. The hook (61) moves away from the door guide rail (R), thus the door roller (KM) and consequently the door is released. During this operation, the hook (61) does not try to lift up the door. Thereby the hook mechanism (6) can be produced with lighter parts and can be used in this system. When the user releases the opening handle (21), the handle (21) uses the centering spring (25) and becomes aligned with the surface that surrounds said handle.

The hook (61) has a special cam form that holds the door roller (KM); such that the weight of the door (61) applies a moment in order to keep the door at the locked position. In the case of any kind of a breakdown except from the hook (61), which can occur in the mechanism the door, shall remain in its locked position which is the preferred position for the door to be during the operation of the aircrafts.

In the case that the elastic element (7) breaks due to any kind of reason, the user can lock the door by pushing the door opening handle (21) and by means of the push pull cable (3) to the hook driver and using the cam form between hook driver and hook, hook (61) is rotated to lock the door at open position. This characteristic carries out the redundant locking function.

The hook mechanism (6), is placed into the door guide rail (R) and consequently to the door roller (KM) at a certain angle. This positioning, enables lighter hooks (61) to be used in order to hold the door roller (KM) and also enables for the locking mechanism (1) to occupy less space. Aside from this, by means of this arrangement, the free travels of the door inside the rail (R) arising from the manufacturing errors can be tolerated.

By the aid of the locking mechanism (1), as it is known from the prior art, when the door is being released by the user, there is no need for the mechanism to overcome the weight of the door. When the user pulls the opening handle (21) towards himself/herself, due to the geometry of the hook (61), the door is taken out from underneath the door cylinder (KM) and it will dislodge from the rail (R) and the door is then released.

It is possible to develop many other variations regarding the embodiment of the locking mechanism (1) subject to the invention without deviating from these basic concepts; therefore the invention cannot be limited with the examples described herein and is principally as described according to the claims.

## Claims

1. An aircraft comprising a sliding passenger door with a locking mechanism and a guide rail, the locking mechanism (1) comprising;
- a door opening handle mechanism (2), that enables for the door of said aircraft to be locked and to be suspended and released when desired during a flight or when the aircraft is parked,
- At least a push-pull cable (3) that transfers the necessary motion of the opening handle (21) in order to ensure that the door is released,
- At least a motion transfer means (4) that submits the motion to the push- pull cable (3) by changing the direction of the movement of the door handle mechanism (2),
- At least a cable connection member (5) that is located on the aircraft used in order to fix the push-pull cable (3) so that it can transfer motion,
- At least a hook mechanism (6) that enables for the door to be locked when at a fully open position and enables for the door to be released when desired, and
- At least an elastic element (7) that forces the hook mechanism (6) to stay inside the guide rail (R) of said door
**characterized by**
- further comprising a hook driver (62) that turns the hook (61) by means of a cam form, and
- the push - pull cable (3) that transfers the movement created at the opening handle (21) to the hook driver (62).

2. An aircraft according to claim 1, **characterized in that** said locking mechanism (2) releases the door by moving the door downwards when a force is applied on top and releasing the door from its locked position, comprising
- At least an opening handle (21) used in order to open the door from the inside of an aircraft,
- At least an opening handle body (22) that is inserted inside the opening handle (21),
- Connection brackets (23,24) that connect the opening handle body (22) to the aircraft structure,
- At least a centering spring (25) that enables for the opening handle (21) to return to its initial position after force is applied to the opening handle (21) and then released,
- At least a lever (26) connected to the centering spring (25) to which the force whose
- At least a lever arm (27) that takes the force that has been applied to the opening handle (21) from the lever (26) and transfers it to the motion transfer means (4), and
- At least a support bracket (28) located on the aircraft structure in order to mount the motion transfer means (4).

3. An aircraft according to claim 1 and 2, **characterized in that**; said mechanism comprises; at least a hook (61) that enables for the door to be fixed and locked at an open position and released when desired,
- At least a hook driver (62) that is mounted onto the top part of the hook (61) and that transfers the motion received from the opening handle (21) to the hook (61),
- At least a door rail part (63) that connects the hook (61) and the hook driver (62) to the door, and
- At least a coupling means (64) that form the rotating axis of the hook (61) and the hook driver (62) by preferably inserting to the guide rail part (63).

4. An aircraft according to any of the preceding claims, **characterized in that**; it comprises a hook (61) that catches the door roller (KM) by means of the cam form, when the aircraft door is slid upwards.

5. An aircraft according to any of the preceding claims, **characterized in that**; it comprises an elastic element (7) that forces the hook (61) to stay inside the guide rail (R).

6. An aircraft according to any of the preceding claims, **characterized in that**; it comprises, a hook driver (62) that ensures that the opening handle (21) does not move when the door is being locked when it is at an open position by means of the cam form located between the hook (61) and the hook driver and that enables the locking motion to be transferred to the hook (61) from the opening handle (21) even when the elastic element (7) is broken.

7. An aircraft according to any of the preceding claims **characterized in that**; it comprises, an opening handle (21) that enables for the door to be released when the user pulls the door handle towards himself/herself preferably at a 30 degree angle with the door.

8. An aircraft according to any of the preceding claims, **characterized in that**; it comprises a hook (61) that moves away from the door guide rail (R), enabling the door roller and consequently the door to be released.

9. An aircraft according to any of the preceding claims, **characterized in that**; it comprises a centering spring (25) that enables the handle (21) to be aligned with the surface it is surrounded by, when the user releases the opening handle (21).

10. An aircraft according to any of the preceding claims, **characterized in that**; it comprises a hook (61) that ensures for the door to be kept at a locked position via the moment applied on it as it has a special cam form.

11. An aircraft according to any of the preceding claims, **characterized in that**; it comprises a hook (61) that tolerates the free motion of the door by placing it in the door guide rail (R), and therefore on the door roller (KM) at a certain angle.

12. An aircraft according to any of the preceding claims, **characterized in that**; it comprises an opening handle mechanism (2) that provides locking by pushing the opening handle, even if the elastic element (7) is broken.

## Patentansprüche

1. Flugzeug mit einer Passagier-Schiebetür mit einem Verriegelungsmechanismus und einer Führungsschiene, wobei der Verriegelungsmechanismus (1) aufweist:
einen Türöffnungs-Griffmechanismus (2), der es der Tür des Flugzeugs ermöglicht, verriegelt zu werden und aufgehängt und freigegeben zu werden, wenn dies während eines Flugs oder wenn sich das Flugzeug in Parkposition befindet gewünscht ist,
wenigstens einem Druck-Zug-Kabel (3), das die notwendige Bewegung des Öffnungsgriffs (21) überträgt, um sicherzustellen, dass die Tür freigegeben wird,
wenigstens eine Bewegungsübertragungseinrichtung (4), die die Bewegung auf das Druck-Zug-Kabel (3) überträgt, indem sie die Richtung der Bewegung des Türgriffmechanismus (2) ändert,
wenigstens ein Kabelverbindungsteil (5), das an dem Flugzeug angeordnet ist und verwendet wird, um das Druck-Zug-Kabel (3) anzubringen, so dass es Bewegung übertragen kann,
wenigstens einen Hakenmechanismus (6), der es der Tür ermöglicht, in einer vollständig geöffneten Stellung verriegelt zu werden, und der es der Tür ermöglicht, auf Wunsch freigegeben zu werden, und
wenigstens ein elastisches Element (7), das den Hakenmechanismus (6) dazu vorspannt, innerhalb der Führungsschiene (R) der Tür zu bleiben,
**dadurch gekennzeichnet,**
**dass** er weiter ein Hakenantriebselement (62) aufweist, das den Haken (61) mittels einer Nockenform dreht, und
**dass** das Druck-Zug-Kabel (3) die an dem Öffnungsgriff (21) erzeugte Bewegung auf das Hakenantriebselement (62) überträgt.

2. Flugzeug nach Anspruch 1, **dadurch gekennzeichnet, dass** der Verriegelungsmechanismus (2) die Tür freigibt, indem die Tür nach unten bewegt wird, wenn oben eine Kraft angewendet wird, und indem die Tür aus ihrer verriegelten Stellung freigegeben wird, mit
wenigstens einem Öffnungsgriff (21), der verwendet wird, um die Tür vom Innenraum eines Flugzeugs aus zu öffnen,
wenigstens einem Öffnungsgriffkörper (22), der in das Innere des Öffnungsgriffs (21) eingeführt ist,
Verbindungsstücken (23, 24), die den Öffnungsgriffkörper (22) mit der Flugzeugstruktur verbinden,
wenigstens einer Zentrierfeder (25), die den Öffnungsgriff (21) in die Lage versetzt, in seine Ausgangsstellung zurückzukehren, nachdem eine Kraft auf den Öffnungsgriff (21) ausgeübt und dieser dann losgelassen worden ist,
wenigstens einem Hebel (26), der mit der Zentrierfeder (25) verbunden ist, auf die die Kraft, deren Richtung geändert worden ist, übertragen wird,
wenigstens einem Hebelarm (27), der die Kraft aufnimmt, die von dem Hebel (26) auf den Öffnungsgriff (21) ausgeübt worden ist, und der sie auf die Bewegungsübertragungseinrichtung (4) überträgt, und
wenigstens einem Haltebügel (28), der an der Flugzeugstruktur angeordnet ist, um die Bewegungsübertragungseinrichtung (4) zu haltern.

3. Flugzeug nach Anspruch 1 und 2, **dadurch gekennzeichnet, dass** der Mechanismus aufweist: wenigstens einen Haken (61), der die Tür in die Lage versetzt, auf Wünsch in einer offenen Stellung fixiert und verriegelt zu werden und freigegeben zu werden,
wenigstens ein Hakenantriebselement (62), das an dem oberen Teil des Hakens (61) angebracht ist und das von dem Öffnungsgriff (21) empfangene Bewegung auf den Haken (61) überträgt,
wenigstens ein Türschienenteil (63), das den Haken (61) und das Hakenantriebselement (62) mit der Tür verbindet, und
wenigstens eine Kopplungseinrichtung (64), die die Drehachse des Hakens (61) und des Hakenantriebselements (62) bildet, vorzugsweise durch Einsetzen in das Führungsschienenteil (63).

4. Flugzeug nach einem der vorhergehenden Ansprüche, **dadurch gekennzeichnet, dass** es einen Haken (61) aufweist, der die Tür-Rolle (KM) mittels der Nockenform verrastet, wenn die Flugzeugtür nach oben verschoben ist.

5. Flugzeug nach einem der vorhergehenden Ansprüche, **dadurch gekennzeichnet, dass** es ein elastisches Element (7) aufweist, das den Haken (61) vorspannt, um innerhalb der Führungsschiene (R) zu bleiben.

6. Flugzeug nach einem der vorhergehenden Ansprüche, **dadurch gekennzeichnet, dass** es ein Hakenantriebselement (62) aufweist, das sicherstellt, dass der Öffnungsgriff (21) sich nicht bewegt, wenn die Tür verriegelt wird, wenn sie sich in einer offenen Stellung befindet, vermittels der Nockenform, die zwischen dem Haken (61) und dem Hakenantriebselement angeordnet ist und die ermöglicht, dass die Verriegelungsbewegung von dem Öffnungsgriff (21) auf den Haken (61) übertragen wird, auch wenn das elastische Element (7) defekt ist.

7. Flugzeug nach einem der vorhergehenden Ansprüche, **dadurch gekennzeichnet, dass** es einen Öffnungsgriff (21) aufweist, der die Tür in die Lage versetzt, freigegeben zu werden, wenn der Bediener den Türgriff zu sich hinzieht, vorzugsweise bei einem Winkel von 30° zu der Tür.

8. Flugzeug nach einem der vorhergehenden Ansprüche, **dadurch gekennzeichnet, dass** es einen Haken (61) aufweist, der sich von der Türführungsschiene (R) wegbewegt, was die Türrolle und folglich die Tür in die Lage versetzt, freigegeben zu werden.

9. Flugzeug nach einem der vorhergehenden Ansprüche, **dadurch gekennzeichnet, dass** es eine Zentrierfeder (25) aufweist, die den Griff (21) in die Lage versetzt, mit der ihn umgebenden Oberfläche ausgerichtet zu werden, wenn der Bediener den Öffnungsgriff (21) loslässt.

10. Flugzeug nach einem der vorhergehenden Ansprüche, **dadurch gekennzeichnet, dass** es einen Haken (61) aufweist, der durch das auf ihn ausgeübte Moment aufgrund seiner speziellen Nockenform sicherstellt, dass die Tür in einer verriegelten Stellung gehalten wird.

11. Flugzeug nach einem der vorhergehenden Ansprüche, **dadurch gekennzeichnet, dass** es einen Haken (61) aufweist, der die freie Bewegung der Tür zulässt, indem er in der Türführungsschiene (R) und daher an der Türrolle (KM) unter einem bestimmten Winkel platziert wird.

12. Flugzeug nach einem der vorhergehenden Ansprüche, **dadurch gekennzeichnet, dass** es einen Öffnungsgriffmechanismus (2) aufweist, der eine Verriegelung durch Drücken des Öffnungsgriffs realisiert, auch wenn das elastische Element (7) defekt ist.

## Revendications

1. Aéronef comprenant une porte passager coulissante avec un mécanisme de verrouillage et un rail de guidage, le mécanisme de verrouillage (1) comprenant :
- un mécanisme de poignée d'ouverture de porte (2), qui permet de verrouiller et de suspendre et de dégager la porte dudit aéronef lorsqu'on le souhaite en vol ou lorsque l'aéronef est stationné,
- au moins un câble tire-pousse (3) qui transfère le mouvement nécessaire de la poignée d'ouverture (21) afin de garantir que la porte est dégagée,
- au moins un moyen de transfert de mouvement (4) qui soumet le mouvement au câble tire-pousse (3) en changeant la direction du déplacement du mécanisme de poignée de porte (2),
- au moins un organe de raccordement de câble (5) qui est situé sur l'aéronef utilisé afin de fixer le câble tire-pousse (3) pour qu'il puisse transférer le mouvement,
- au moins un mécanisme de crochet (6) qui permet de verrouiller la porte lorsqu'elle est en position totalement ouverte et permet de dégager la porte lorsqu'on le souhaite, et
- au moins un élément élastique (7) qui force le mécanisme de crochet (6) à rester à l'intérieur du rail de guidage (R) de ladite porte
**caractérisé en ce qu'**il comprend en outre
- un dispositif d'entraînement de crochet (62) qui tourne le crochet (61) au moyen d'une forme de came, et
- le câble tire-pousse (3) qui transfère le déplacement créé au niveau de la poignée d'ouverture (21) au dispositif d'entraînement de crochet (62).

2. Aéronef selon la revendication 1, **caractérisé en ce que** ledit mécanisme de verrouillage (2) dégage la porte en déplaçant la porte vers le bas lorsqu'une force est appliquée sur le dessus et dégageant la porte de sa position verrouillée, comprenant
- au moins une poignée d'ouverture (21) utilisée afin d'ouvrir la porte depuis l'intérieur d'un aéronef,
- au moins un corps de poignée d'ouverture (22) qui est inséré à l'intérieur de la poignée d'ouverture (21),
- des ferrures de raccordement (23, 24) qui raccordent le corps de poignée d'ouverture (22) à la structure d'aéronef,
- au moins un ressort de centrage (25) qui permet de renvoyer la poignée d'ouverture (21) à sa position initiale après qu'une force est appliquée à la poignée d'ouverture (21) puis est dégagée,
- au moins un levier (26) raccordé au ressort de centrage (25) auquel est transférée la force dont la direction a été changée,
- au moins un bras de levier (27) qui prend la force qui a été appliquée à la poignée d'ouverture (21) du levier (26) et la transfère au moyen de transfert de mouvement (4), et
- au moins une ferrure de support (28) située sur la structure d'aéronef afin de monter le moyen de transfert de mouvement (4).

3. Aéronef selon la revendication 1 et 2, **caractérisé en ce que** ; ledit mécanisme comprend: au moins un crochet (61) qui permet de fixer et de verrouiller la porte en position ouverte et de la dégager lorsqu'on le souhaite,
- au moins un dispositif d'entraînement de crochet (62) qui est monté sur la partie de dessus du crochet (61) et qui transfère le mouvement reçu de la poignée d'ouverture (21) au crochet (61),
- au moins une partie de rail de porte (63) qui raccorde le crochet (61) et le dispositif d'entraînement de crochet (62) à la porte, et
- au moins un moyen de couplage (64) qui forme l'axe de rotation du crochet (61) et le dispositif d'entraînement de crochet (62) en l'insérant de préférence dans la partie de rail de guidage (63).

4. Aéronef selon l'une quelconque des revendications précédentes, **caractérisé en ce qu'**il comprend un crochet (61) qui saisit le galet de porte (KM) au moyen de la forme de came, lorsque la porte d'aéronef est coulissée vers le haut.

5. Aéronef selon l'une quelconque des revendications précédentes, **caractérisé en ce qu'**il comprend un élément élastique (7) qui force le crochet (61) à rester à l'intérieur du rail de guidage (R).

6. Aéronef selon l'une quelconque des revendications précédentes, **caractérisé en ce qu'**il comprend un dispositif d'entraînement de crochet (62) qui garantit que la poignée d'ouverture (21) ne bouge pas lorsque la porte est verrouillée en étant en position ouverte au moyen de la forme de came située entre le crochet (61) et le dispositif d'entraînement de crochet et qui permet de transférer le mouvement de verrouillage au crochet (61) depuis la poignée d'ouverture (21) même lorsque l'élément élastique (7) est cassé.

7. Aéronef selon l'une quelconque des revendications précédentes, **caractérisé en ce qu'**il comprend une poignée d'ouverture (21) qui permet de dégager la porte lorsque l'utilisateur pousse la poignée de porte vers lui/elle de préférence à un angle de 30 degrés avec la porte.

8. Aéronef selon l'une quelconque des revendications précédentes, **caractérisé en ce qu'**il comprend un crochet (61) qui s'éloigne du rail de guidage de porte (R), permettant de dégager le galet de porte et par conséquent la porte.

9. Aéronef selon l'une quelconque des revendications précédentes, **caractérisé en ce qu'**il comprend un ressort de centrage (25) qui permet d'aligner la poignée (21) avec la surface qui l'entoure, lorsque l'utilisateur dégage la poignée d'ouverture (21).

10. Aéronef selon l'une quelconque des revendications précédentes, **caractérisé en ce qu'**il comprend un crochet (61) qui garantit que la porte est conservée en position verrouillée via le moment qui lui est appliqué lorsqu'il a une forme de came spéciale.

11. Aéronef selon l'une quelconque des revendications précédentes, **caractérisé en ce qu'**il comprend un crochet (61) qui tolère le mouvement libre de la porte en la plaçant dans le rail de guidage de porte (R), et par conséquent sur le galet de porte (KM) à un certain angle.

12. Aéronef selon l'une quelconque des revendications précédentes, **caractérisé en ce qu'**il comprend un mécanisme de poignée d'ouverture (2) qui assure le verrouillage en poussant la poignée d'ouverture, même lorsque l'élément élastique (7) est cassé.
